# EUROPÄISCHE PATENTSCHRIFT

(11) **EP 2 362 514 B1**
(45) Veröffentlichungstag und Bekanntmachung des Hinweises auf die Patenterteilung: **06.04.2016**
(21) Anmeldenummer: 11001529.4
(22) Anmeldetag: 24.02.2011
(51) Int. Cl.: H02H 9/08, H01F 29/14

(54) **Vorrichtung zur Fehlerstromreduktion**
Device for reducing earth leakage current
Dispositif de réduction du courant de défaut à la terre

(30) Priorität: 25.02.2010 AT 2932010
(43) Veröffentlichungstag der Anmeldung: 31.08.2011
(73) Patentinhaber: ÖBB-Infrastruktur Aktiengesellschaft, 1120 Wien (AT)
(72) Erfinder: Obkircher, Clemens, 6020 Innsbruck (AT)
(74) Vertreter: Puchberger, Peter

(56) Entgegenhaltungen:
- DE-C- 397 819
- DE-C- 919 181

## Beschreibung

Die Erfindung betrifft eine mehrphasige elektrische Energieübertragungsstrecke.

Elektrische Energieübertragungsstrecken werden üblicherweise als dreiphasige Wechselstromsysteme ausgeführt. Darüber werden insbesondere auf dem Gebiet der Bahnstromversorgung auch bevorzugt ein- und zweiphasige Energieübertragungsstrecken eingesetzt.

Derartige elektrische Energieübertragungsstrecken bestehen in der Regel aus einem Eingangstransformator zum Anschluss eines Generators, einer Leitung, die als Freileitung oder als Erdleitung ausgeführt sein kann, und einem Ausgangstransformator und/oder einer Last. Am Eingangstransformator werden die zwei, drei oder mehr Phasen üblicherweise in Form einer Sternschaltung angeordnet, wobei der Stempunkt des Eingangstransformators isoliert, starr geerdet oder gelöscht ausgeführt werden kann.

Die Art der Stempunktbehandlung ist insbesondere dann von Bedeutung, wenn Erdfehler (Erdschluss, Erdschlusswischer), also Kontakte einer Phase mit dem Erdpotential, im Netz auftreten. Die einzelnen Phasen der Energieübertragungsstrecke verfügen über eine etwa gleich große Kapazität gegen Erde (Erdkapazität), die insbesondere davon abhängig ist, ob es sich um eine Freileitung oder eine Erdleitung handelt. Erdleitungen weisen im Vergleich zu Freileitungen bis zu 50 mal höhere Erdkapazitäten auf.

Tritt ein Erdschluss einer Phase auf, so wird die zugehörige Erdkapazität kurz geschlossen und die betreffende Phase wird auf das Erdpotential gezwungen. Eine erdschlussbehaftete Leitung muss nicht sofort abgeschattet werden, das Netz lässt sich weiterhin ohne betriebliche Einschränkungen zum Energietransport nutzen. Die Spannung auf den nicht betroffenen Phasen erhöht sich jedoch gegenüber dem Erdpotential, und es fließt ein kapazitiver Fehlerstrom über die bestehenden Erdkapazitäten. Dieser Fehlerstrom ist direkt proportional zur Erdkapazität. Dies bedeutet, dass größere Netze oder der Einsatz von Erdleitungen statt Freileitungen zu größeren Erdschlussströmen führen.

Bei einem Dauererdschluss im symmetrischen Dreiphasennetz steigt beispielsweise die Leitererdespannung in den fehlerfreien Phasen auf den √3-fachen Wert. In Freileitungsnetzen kann mit der Selbstlöschung des Lichtbogens gerechnet werden, wenn der kapazitive Erdschlussstrom kleiner als 35 A (für 10 kV bis 20 kV-Netze), kleiner als 60 A (für 60 kV-Netze) oder kleiner als 132 A (für 110 kV-Netze) ist Dieser maximal erlaubte Stromwert ist genormt wird als Löschgrenze bezeichnet.

Zur Reduzierung oder Unterdrückung des kapazitiven Erdschlußstroms werden aus diesem Grund bei Mittel- und Hochspannungsnetzen im Bereich von 10 kV bis 110 kV üblicherweise gelöschte Netze vorgesehen. Bei gelöschten Netzen wird der Stempunkt des Eingangstransformators über eine Löschspule, die sogenannte Petersenspule, deren Induktivität oft veränderbar ist, geerdet. Bei einem Erdschluss wird der kapazitive Fehlerstrom durch einen entsprechend gleich großen induktiven Strom durch diese Spule kompensiert. Bei einer vollständigen Abstimmung der Induktivität der Löschspule auf die Kapazität des Netzes gegen Erde fließt bei einem einpoligen Erdschluss nur noch ein Ohmscher Reststrom und der verbleibende Oberschwingungsreststrom.

Dieser aus ohmschem Anteil und Oberschwingungsanteil bestehende Reststrom ist deutlich kleiner als der, in ungelöschten Netzen auftretende kapazitive Fehlerstrom. Seine vollständige passive Kompensation ist wegen der Ohmschen Komponente und der Einstellung der Löschspule auf die Betriebsfrequenz nicht möglich.

Bei Netzerweiterungen ist man oft, beispielsweise aus Platzgründen, gezwungen, diese mittels Erdleitungen auszuführen. Entsprechend der höheren Erdkapazität der Erdleitungen tritt bei einem Erdschluss ein deutlich höherer Fehlerstrom auf. Darüber hinaus verursachen diese Erdkapazitäten frequenzabhängige Resonanzen im Fehlerstrom, da die Erdkapazität eines Kabels und die Längsinduktivität einer Freileitung im Erdschlussfall eine Serienresonanz ausbilden können. Um diese Resonanzen zu verhindern, müsste eine aufwendige Oberschwingungsfilterung installiert werden, oder auf Kabel gänzlich verzichtet werden. Diese Resonanzen aufgrund der erhöhten Erdkapazität führen dazu, dass auch in einem gelöschten Netz die Löschgrenze durch den auftretenden, nicht kompensierten Fehlerstrom erreicht oder überschritten werden kann.

Zur Reduzierung der Fehlerströme können Oberschwingungsfiltem eingesetzt werden, es erfolgt dabei jedoch im Allgemeinen keine Reduktion der Grundschwingung des Fehlerstroms. Eine alleinige Filterung der Oberschwingungsrestströme ist nicht ausreichend. Darüber hinaus sind Oberschwingungsfilter im Allgemeinen kompliziert aufgebaut und müssen, wie alle Filter, bei allen Verbrauchern separat vorgesehen werden.

Wenn die Löschgrenze erreicht wird, muss man Maßnahmen setzen, um den Fehlerstrom zu reduzieren, oder um den Fehler innerhalb einer vorgegebenen Zeit abzuschalten. Eine schnelle und selektive Ortung des Erdschlusses ist jedoch vor allem in einem gelöschten Netz nicht einfach, weshalb Maßnahmen zum Begrenzen des Fehlerstromes bevorzugt werden.

Eine mögliche Maßnahme ist insbesondere die Netztrennung mit Hilfe von Trenntransformatoren, wie sie beispielsweise in der DE 199 06 457 A1 beschrieben ist Bei dieser Lösung wird das zu schützende Netz, beispielsweise die Erdleitung, an ihrem Beginn und Ende durch einen Transformator vom Rest des Netzes galvanisch getrennt. Diese Lösung ist jedoch aufwendig, teuer und verlustbehaftet (Leerlaufverluste eines Transformators für die Magnetisierung), und kann nur in Ausnahmefällen angewandt werden.

Die Druckschrift DE 397 819 zeigt eine Vorrichtung zur Fehlerstromreduktion in einer mehrphasigen elektrischen Energieübertragungsstrecke, wobei ein Fehlerstromreduzierer vorgesehen ist, der zumindest zwei Phasen der elektrischen Energieübertragungsstrecke induktiv koppelt, wobei der Fehlerstromreduzierer einen Eisenkern mit voneinander elektrisch isolierten, induktiv gekoppelten Spulen umfasst, wobei die Spulen mit den Phasen der Energieübertragungsstrecke verbunden sind und gleiche Wicklungszahlen aufweisen.

Die DE 919 181 zeigt einen Drehstromtransformator mit isoliertem Nullpunkt, der eine in offenem Dreieck geschaltene Hilfswicklung besitzt, die über eine Frequenzweiche angeschlossen ist, wobei die Frequenzweiche aus Widerständen, Kondensatoren und Spulen besteht und gleichmäßig auf die drei Phasenwicklungen verteilt ist.

Die Aufgabe der vorliegenden Erfindung besteht demnach darin, eine Vorrichtung bereitzustellen, mit dem die nicht kompensierten bzw. nicht kompensierbaren Fehlerrestströme, insbesondere ohmsche Ströme und Oberschwingungen, gelöschter Netze im Erdschlussfall reduziert werden können. Es sollen nicht nur die Oberschwingungen, sondern auch die Grundschwingung reduziert bzw. gedämpft werden. Die Vorrichtung soll mit möglichst wenigen Bauelementen realisiert werden können. Eine Symmetrierung der Phasen soll vermieden werden. Die Verwendung von Trenntransformatoren soll vermieden werden. Die Vorrichtung soll insbesondere die erhöhten Fehlerrestströme bei der Verwendung von Erdleitungen reduzieren.

Diese Aufgabe wird erfindungsgemäß mit einer Energieübertragungsstrecke gemäß Anspruch 1 und einem Verfahren gemäß Anspruch 12 gelöst.

Indem an bestimmten Stellen einer elektrischen Energieübertragungsstrecke eine induktive Kopplung zwischen den Phasen erfolgt, wird eine Kopplung der Leitungsströme erreicht, wodurch unsymmetrische Ströme unterdrückt werden. Dies gilt sowohl während des normalen Betriebs, als auch insbesondere im Fall eines Erdschlusses. Dadurch können die auftretenden Fehlerströme stark reduziert werden, und das Netz wird symmetrischer. Der Aufwand und der Eingriff ins Netz ist wesentlich geringer als bei einer Netztrennung mittels Trenntransformatoren wie oben beschrieben. Es können insbesondere auch kostengünstige Standardtransformatoren verwendet werden. Im Vergleich zu Trenntransformatoren verursacht diese Form der Fehlerstromreduktion wesentlich geringere Verluste, da sich die Magnetfelder im Leerlaufbetrieb nahezu aufheben. Nur im Fehlerfall werden durch Ummagnetisierungs- oder Eisenverluste größere Wirbelströme verursacht, wobei dieser Betriebszustand aber von begrenzter Dauer ist. Auch im fehlerfreien Betrieb werden Netzasymmetrien reduziert.

Durch die erfindungsgemäße Vorrichtung werden sowohl die Grundschwingung, als auch die Oberschwingungen bei Erdfehlern in gelöschten Netzen reduziert. Im fehlerfreien Betrieb erfolgt keine Reduktion der symmetrischen Oberschwingungen, es erfolgt also keine Filterwirkung wie dies bei der Verwendung von Filtern der Fall wäre. Eine derartige Filterwirkung ist ja im regulären Betrieb unerwünscht Weiters erlaubt die erfindungsgemäße Vorrichtung einen lokalen Betrieb, z.B. für ein Kabel.

Der Fehlerstromreduzierer kann als Transformator mit einer Primärwicklung und einer Sekundärwicklung ausgeführt sein, wobei das Übersetzungsverhältnis gleich 1 sein muss. Eine Phase der Energieübertragungsstrecke wird mit der Primärwicklung des Transformators, und eine andere Phase der Energieübertragungsstrecke mit der Sekundärwicklung verbunden. Dadurch erfolgt keine galvanische Trennung der jeweiligen Phase, sondern eine induktive Kopplung der beiden Phasen, und Oberschwingungen, die auf einer Phase auftreten, werden gedämpft. Es kann insbesondere vorgesehen sein, dass die Primärwicklung und die Sekundärwicklung auf dem selben Schenkel des Transformators angebracht sind. Insbesondere ist pro Phase eine Induktivität vorgesehen, und es sind keine weiteren Bauelemente (Kondensatoren, etc.) wie bei Filterkreisen erforderlich.

Die erfindungsgemäße Vorrichtung ist nicht auf die Verwendung eines Transformators beschränkt. Der erfindungsgemäße Fehlerstromreduzierer kann einen Eisenkern mit zumindest drei voneinander elektrisch isolierten, induktiv miteinander gekoppelten Wicklungen umfassen, wobei die Wicklungen mit den Phasen der Energieübertragungsstrecke verbunden sind. Insbesondere kann der Fehlerstromreduzierer der erfindungsgemäßen Vorrichtung einen 3-Phasentransformator umfassen, dessen Primär- und Sekundärwicklungen miteinander verschalten sind und drei induktiv gekoppelte kombinierte Wicklungen bilden, wobei je einer der Phasen der Energieübertragungsstrecke mit je einer kombinierten Wicklung verbunden ist Dadurch ist eine kostengünstige Verwendung handelsüblicher Komponenten möglich. In diesem Fall muss auch das Übersetzungsverhältnis des verwendeten Transformators nicht gleich eins sein, da ja Primär- und Sekundärwicklung miteinander verbunden werden, und eine gemeinsame kombinierte Wicklung bilden. Einzig die Anzahl der Wicklungen pro Phase muss gleich sein. Es ist insbesondere erfindungsgemäß vorgesehen, dass die Wicklungen auf dem selben Schenkel des 3-Phasentransformators angeordnet sind. Dabei kann eine überlappende Anordnung der voneinander isolierten Wicklungen vorgesehen sein, oder die Wicklungen können hintereinander auf dem Schenkel des 3-Phasentransformators angebracht werden.

Wie oben erwähnt ist insbesondere der Übergang einer Freileitung in eine Erdleitung auf Grund der hohen Erdkapazität der Erdleitung problematisch. Es ist deshalb erfindungsgemäß vorgesehen, den Fehlerstromreduzierer beim Übergang einer Freileitung in eine Erdleitung vorzusehen. Darüber hinaus können zusätzliche Ausgleichswicklungen oder Drosselspulen zur Dämpfung von Oberschwingungsresonanzen im Fehlerstromreduzierer vorgesehen sein.

Der Aufbau eines erfindungsgemäßen Fehlerstromreduzierers entspricht also einem Transformator, der in das Netz eingefügt wird, ohne jedoch das Netz galvanisch zu trennen. Der Fehlerstromreduzierer bewirkt eine Kopplung der Phasen, wodurch Fehlerströme und insbesondere Oberschwingungen reduziert werden.

Die Erfindung erstreckt sich sowohl auf eine mehrphasige elektrische Energieübertragungsstrecke, die eine Vorrichtung zur Fehlerstromreduktion wie oben beschrieben umfasst, als auch auf das Verfahren, zwei oder mehr der elektrischen Phasen einer elektrischen Energieübertragungsstrecke an ausgewählten Stellen zur Fehlerstromreduktion induktiv zu koppeln.

Weitere erfindungsgemäße Merkmale können der Beschreibung oder den Patentansprüchen entnommen werden.

Die Erfindung wird im Folgenden anhand einiger nicht beschränkender Ausführungsbeispiele näher erläutert.
Fig. 1 zeigt eine dreiphasige elektrische Energieübertragungsstrecke bei der ein Fehlerstromreduzierer am Beginn einer Freileitung platziert ist;
Fig. 2 zeigt eine dreiphasige elektrische Energieübertragungsstrecke bei der ein Fehlerstromreduzierer am Beginn einer Erdleitung platziert ist;
Fig. 3 zeigt eine Ausführungsform eines Fehlerstromreduzierers in Form eines Eisenkerns mit drei voneinander elektrisch isolierten, induktiv gekoppelten Wicklungen;
Fig. 4 zeigt eine Ausführungsform eines Fehlerstromreduzierers in Form eines 3-Phasentransformators, dessen Primär- und Sekundärwicklung jeder Phase miteinander verbunden sind;
Fig. 5 zeigt eine elektrische Energieübertragungsstrecke bei der ein Fehlerstromreduzierer am Beginn einer zweiphasig ausgeführten Erdleitung platziert ist;
Fig. 6 zeigt eine zweiphasige elektrische Energieübertragungsstrecke, insbesondere ein Bahnstromversorgungsnetz, bei der ein Fehlerstromreduzierer am Beginn einer Erdleitung platziert ist;
Fig. 7 zeigt einen Fehlerstromreduzierer in Form eines zweiphaslgen Transformators;
Fig. 8 zeigt ein Einlinienersatzschaltbild eines mehrphasigen elektrischen Energieübertragungsnetzes;
Fig. 9 zeigt das Simulationsergebnis im Fehlerfall des Netzes aus Fig. 7 im Fall eines 2-Phasennetzes;
Fig. 10 zeigt das Simulationsergebnis im Fehlerfall des Netzes aus Fig. 7 im Fall eines 3-Phasennetzes.

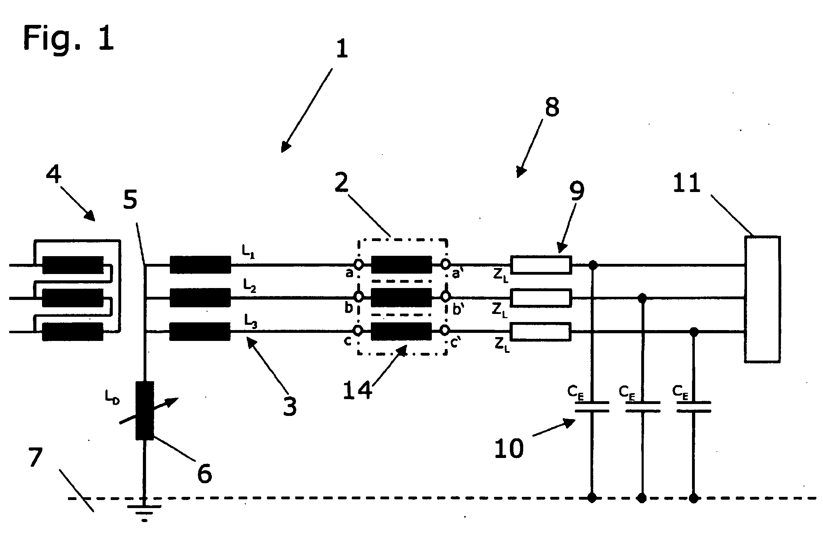

Fig. 1 zeigt eine dreiphasige elektrische Energieübertragungsstrecke 1 mit einem Fehlerstromreduzierer 2, der die elektrischen Phasen 3, die mit L₁, L₂ und L₃ bezeichnet sind, induktiv koppelt. Der Fehlerstromreduzierer 2 umfasst drei miteinander induktiv gekoppelte Spulen 14, und die elektrischen Phasen 3 sind mit diesen Spulen an den Anschlüssen a - a', b - b' und c - c' verbunden.
Die Energieübertragungsstrecke 1 verfügt über einen Eingangstransformator 4, der einen Stempunkt 5 ausbildet. Dieser Stempunkt 5 ist über die einstellbaren Löschspule 6 mit dem Erdpotential 7 verbunden. Die Energieübertragungsstrecke 1 ist als Freileitung 8 ausgeführt und die einzelnen Phasen 3 weisen Leitungsimpedanzen 9 auf. Gegenüber dem Erdpotential 7 haben die einzelnen Phasen eine jeweilige Erdkapazität 10, die mit C_{E} bezeichnet ist. Das Netz ist mit der Last 11 verbunden.

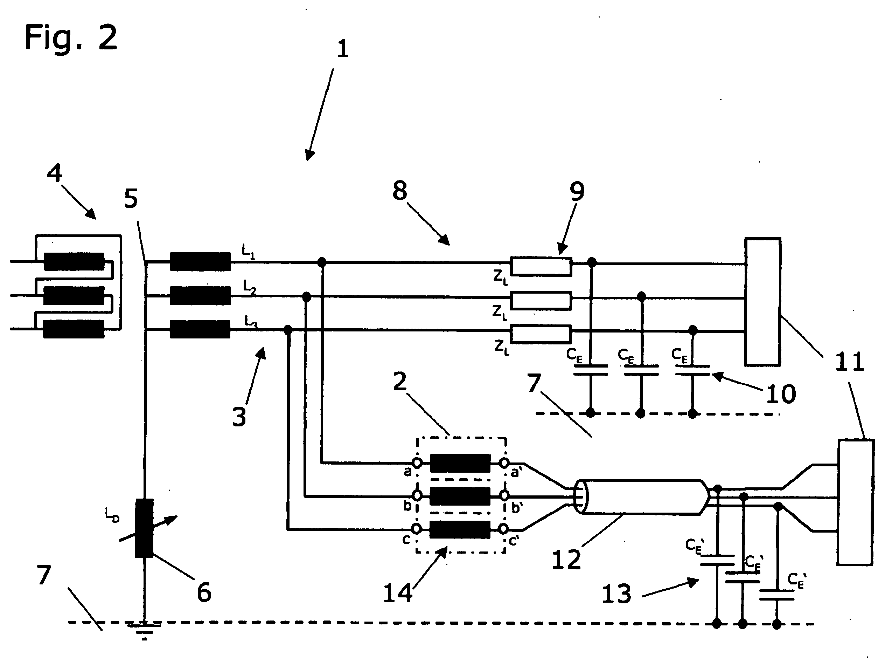

Fig. 2 zeigt eine erfindungsgemäße elektrische Energieübertragungsstrecke 1, die eine Freileitung 8 und eine Erdleitung 12 umfasst. Die Erdkapazitäten 13 der Erdleitung 12, in der Figur mit C_{E}' bezeichnet, sind deutlich höher als die Erdkapazitäten 10 der Freileitung 8. Am Übergang der Freileitung 8 in die Erdleitung 12 ist ein erfindungsgemäßer Fehlerstromreduzierer 2 vorgesehen, der wieder die induktiv gekoppelten Spulen 14 umfasst die mit den Phasen 3 verbunden sind. Die Erdleitung 12 ist an ihrem Ende mit einer Last 11 verbunden.

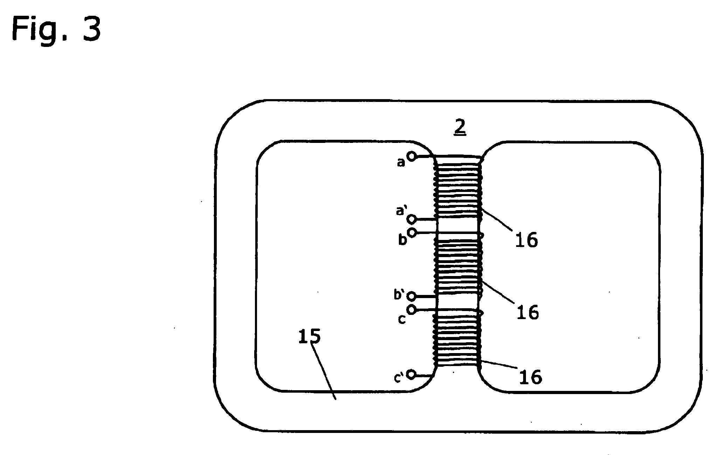

Fig. 3 zeigt ein Ausführungsbeispiel eines dreiphasigen Fehlerstromreduzierers 2. Dieser Fehlerstromreduzierer 2 umfasst einen Eisenkern 15 mit drei Schenkeln. Derartige Eisenkerne sind insbesondere aus einem Paket voneinander isolierter ferromagnetischer, also magnetisierbarer, Bleche gebildet. An einem Schenkel sind drei Wicklungen 16 mit den Anschlüssen a-a', b-b' und c-c' angeordnet. Die Wicklungen sind auf dem mittleren Schenkel hintereinander angeordnet, können aber auch überlappend angeordnet sein. Die drei Phasen 3 der Energieübertragungsstrecke 1 aus Fig. 1 oder Fig. 2 sind mit diesen drei Wicklungen 16 des Fehlerstromreduzierers 2 verbunden. Durch den gemeinsamen Eisenkern erfolgt eine induktive Kopplung der drei Phasen. Die Wicklungen 16 weisen die gleiche Wicklungszahl auf.

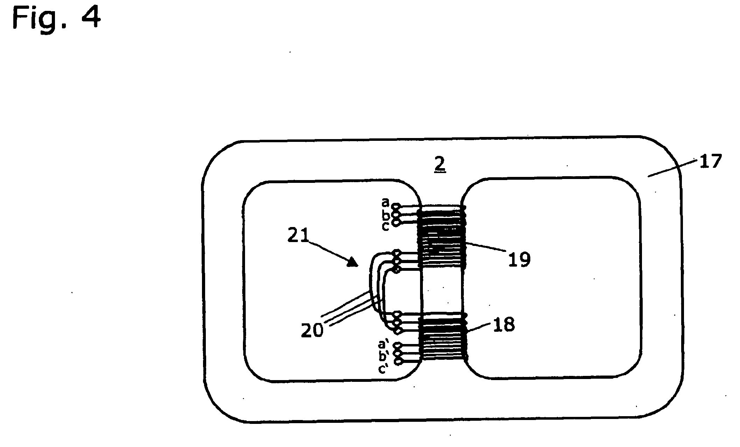

Fig. 4 zeigt eine weitere Ausführungsform des Fehlerstromreduzierers 2. In diesem Ausführungsbeispiel umfasst der Fehlerstromreduzierer 2 einen 3-Phasentransformator 17 der die drei Primärwicklungen 18 und die drei Sekundärwicklungen 19 aufweist Sämtliche Wicklungen sind auf einem Schenkel des Transformators angebracht und überlappen sich teilweise. Die Wicklungen können hintereinander oder überlappend auf den Schenkel aufgebracht sein, wesentlich ist die magnetische Kopplung durch den gemeinsamen Schenkel. Durch eine Verbindung der jeweiligen Primär- und Sekundärwicklungen durch die Brücken 20 werden drei galvanisch getrennte, induktiv gekoppelte kombinierte Wicklungen 21 gebildet. Die drei Phasen 3 der Energieübertragungsstrecke aus Fig. 1 oder Fig. 2 sind mit diesen drei kombinierten Wicklungen 21 verbunden und dadurch induktiv gekoppelt. Die kombinierten Wicklungen 21 weisen die gleiche Wicklungszahl auf.

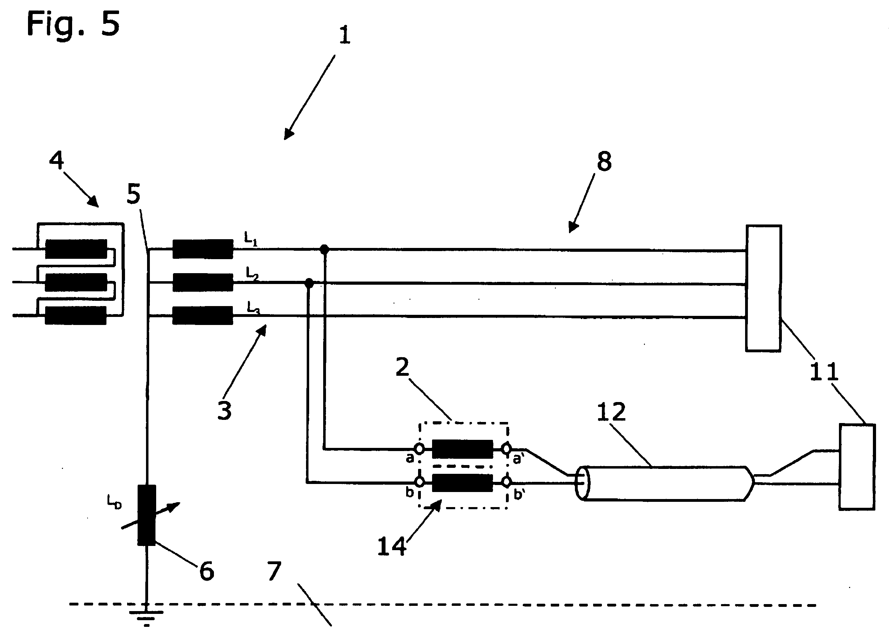

Fig. 5 zeigt ein weiteres erfindungsgemäßes Ausführungsbeispiel. In diesem Fall ist eine zweiphasige Erdleitung 12 von einer dreiphasigen Freileitung 8 abgezweigt. Der Fehlerstromreduzierer 2 koppelt die beiden Phasen der Erdleitung 12 und ist am Abzweigungspunkt der Erdleitung angebracht. Die Kopplung der zweiphasigen Erdleitung 12 mit der dreiphasigen Freileitung 8 kann insbesondere unter Verwendung eines Scott-Transformators erfolgen, um unsymmetrische Belastungen des Netzes zu reduzieren.

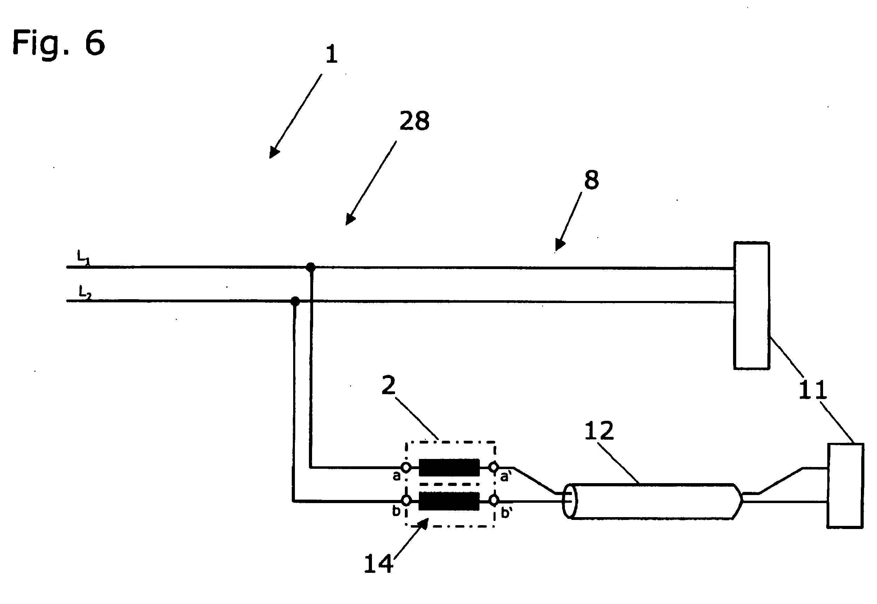

Fig. 6 zeigt ein weiteres erfindungsgemäßes Ausführungsbeispiel, bei dem die elektrische Energieübertragungsstrecke 1 durch ein zweiphasiges Bahnstromversorgungsnetz 28 gebildet ist, welches insbesondere eine Frequenz von 16,7 Hz aufweist. Das Bahnstromversorgungsnetz umfasst die Freileitung 8 und die Erdleitung 12, wobei beide Leitungen an ihrem Ende über eine Last 11 verfügen. Vor dem Übergang zur Erdleitung 12 ist der Fehlerstromreduzierer 2 vorgesehen, der die elektrischen Phasen mit Hilfe der Spulen 14 induktiv koppelt.

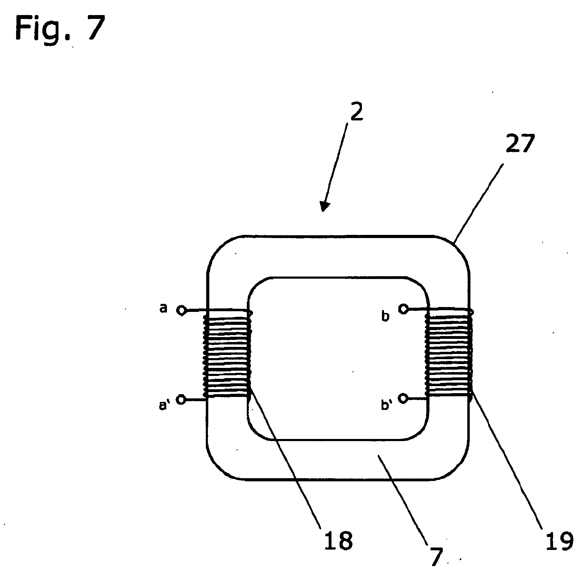

Fig. 7 zeigt eine Ausführungsform des Fehlerstromreduzierers 2 zur Verwendung im Ausführungsbeispiel der Fig. 5. Der Fehlerstromreduzierer 2 ist als zweiphasiger Transformator 27 mit einer Primärwicklung 18 und einer Sekundärwicklung 19 auf einem gemeinsamen Eisenkern 15 ausgeführt Die Primärwicklung 18 ist mit der ersten Phase der Erdleitung 12 aus Fig. 5, und die Sekundärwicklung 19 mit der zweiten Phase der Erdleitung 12 aus Fig. 5 verbunden. Dadurch erfolgt wiederum eine induktive Kopplung der beiden Phasen der Erdleitung 8 aus Fig. 5. In diesem Fall müssen die Wicklungen 18 und 19 die gleiche Wicklungszahl aufweisen.

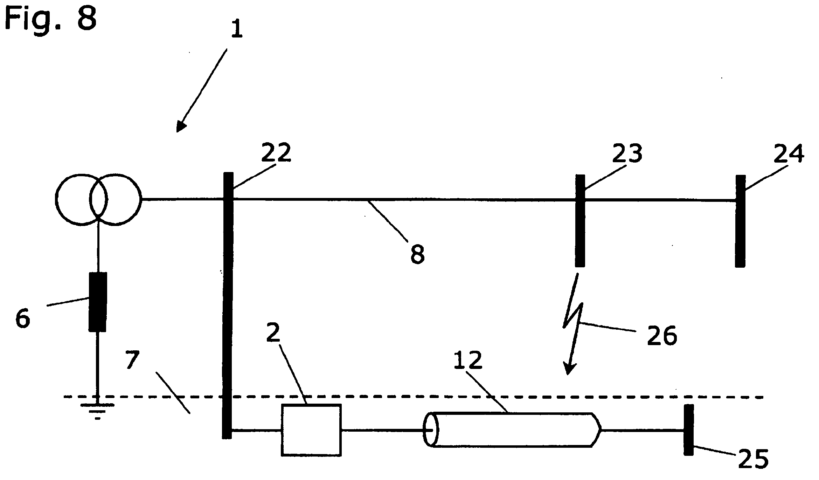

Fig. 8 zeigt ein Einlinienersatzschaltbild für die Simulation einer gelöschten Energieübertragungsstrecke 1, die über eine Freileitung 8 und eine Erdleitung 12 verfügt. Die Erdleitung 12 ist erfindungsgemäß an ihrem Abzweigpunkt, der Sammelschiene 22, mit einem erfindungsgemäßen Fehlerstromreduzierer 2 versehen. Weitere Sammelschienen 23, 24 und 25 sind vorgesehen. Der Simulation wird ein Erdschluss 26 der Freileitung 8 an der Sammelschiene 23 zu Grunde gelegt.

Zunächst erfolgt eine Simulation dieses Netzes mit 110 kV, zwei Phasen und einer Frequenz von 50 Hz. Das Erdkabel 14 ist 39 km lang und hat einen ungelöschten Reststrom von 203 A (Grundschwingung). Die Hochspannungsfreileitung hat eine Länge von 100 km und der Erdschluss 26 tritt bei der Sammelschiene 23 auf, wobei dieser Fehlerort variiert wurde. An den Sammelschienen 24 und 25 wurden Lasten mit 20 MW platziert. Am Anfang der Erdleitung wurde der Fehlerstromreduzierer installiert, um die durch die Erdleitung verursachten Restströme zu reduzieren. Auf der Sammelschiene 22 wurden zusätzlich Oberschwingungsströme eingespeist um die Auswirkungen der Vorrichtung auf die Oberschwingungsfehlerströme zu dokumentieren.

Die Spannungen an der Quelle waren:

| | | |
|---|---|---|
| Grundschwingungsspannung | | 110000 V |
| 3. Oberschwingung | 7500 V = 6,8% | |
| 5. Oberschwingung | 25000 V = 23 % | |
| 7. Oberschwingung | 18000 V = 16 % | |

Diese hohen Oberschwingungsströme (-spannungen) wurden gewählt, um den Effekt besser darzustellen. Der Effekt ließe sich auch mit kleineren Oberschwingungsspannungen in einem größeren Netz darstellen. Bei gleicher Netzkonfiguration (Art des Netzaufbaus) sind die Oberschwingungsrestströme an einem Fehlerort direkt proportional zur Oberschwingungsspannung und zur Netzgröße.

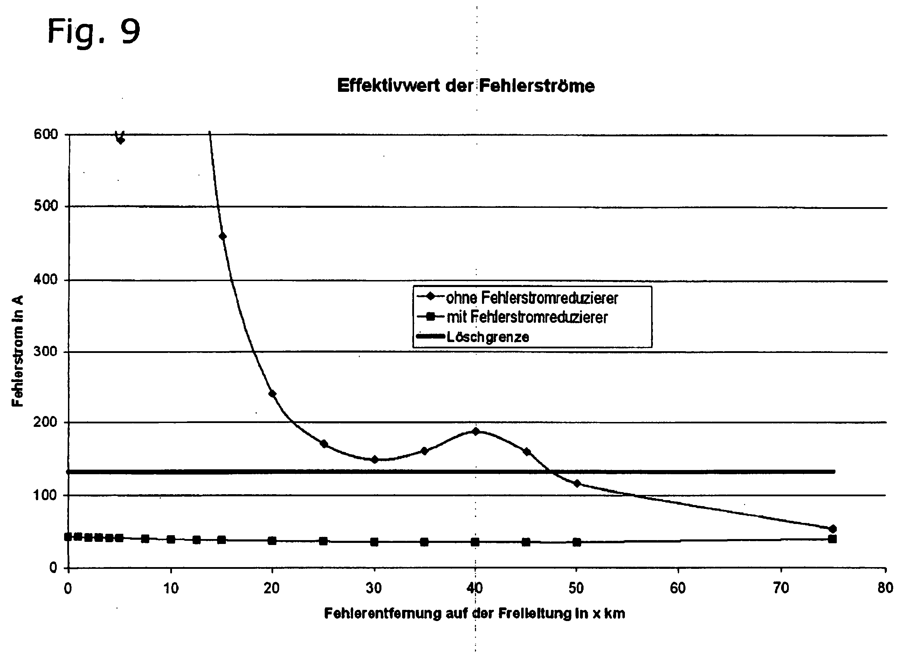

Fig. 9 zeigt das Simulationsergebnis der auftretenden Fehlerströme mit und ohne Einsatz des Fehlerstromreduzierers. Man sieht das, abhängig von der Entfernung des Fehlers auf der Freilegung, die Löschgrenze ohne Fehlerstromreduzierer deutlich überschritten werden kann. Bei Verwendung des Fehlerstromreduzierers tritt keine Überschreitung der Löschgrenze auf.

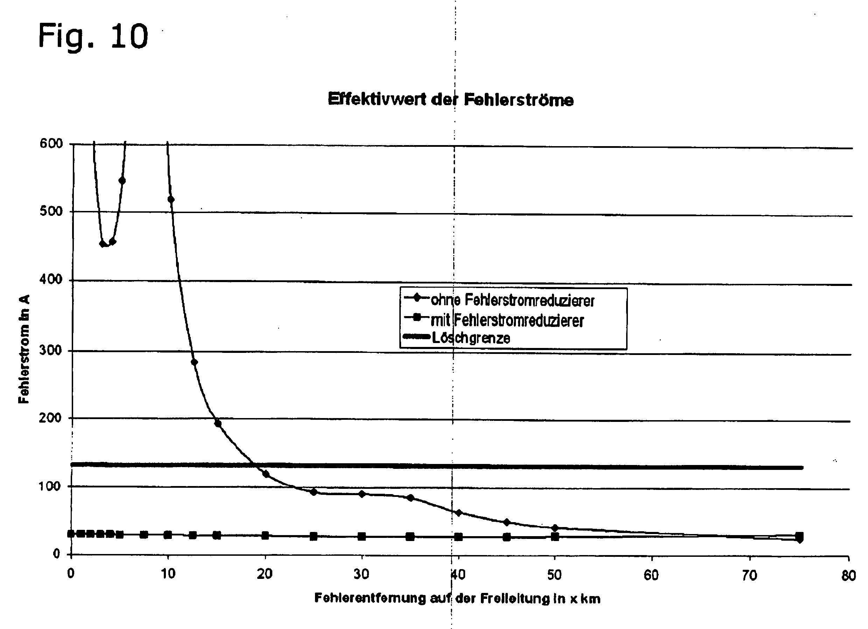

Fig. 10 zeigt ein weiteres Simulationsergebnis der elektrischen Energieübertragungsstrecke aus Fig. 7 im Fall eines dreiphasigen 110 kV-Netzes mit 50 Hz.

Die Länge der Erdleitung wurde wieder mit 39 km angenommen, und die Erdleitung hat einen ungelöschten Reststrom von 500 A (Grundschwingung). Die Hochspannungsfreileitung (HFL) wurde mit 100 km Länge und variierendem Fehlerort (Sammelschiene 23) gewählt. An den Sammelschienen 24 und 25 wurden Lasten mit 20 MW platziert. Am Anfang der Erdleitung wurde der Fehlerstromreduzierer installiert, um die durch das Kabel verursachten Restströme zu reduzierten. Auf Sammelschiene 22 wurden zusätzlich Oberschwingungsströme eingespeist um die Auswirkungen der Vorrichtung auf die Oberschwingungsfehlerströme zu dokumentieren.

Die Spannungen an der Quelle waren:

| | | |
|---|---|---|
| Grundschwingungsspannung | | 110000 V |
| 3. Oberschwingung | 1300 V = 1,2 % | |
| 5. Oberschwingung | 7700 V = 7 % | |
| 7. Oberschwingung | 5600 V = 5,1 % | |

Wieder zeigt sich aus dem Simulationsergebnis in Fig. 9, dass der Fehlerstromreduzierer die auftretenden Fehlerströme deutlich unter die Löschgrenze reduziert.

Die vorliegende Erfindung ist nicht auf die gezeigten Ausführungsbeispiele beschränkt. Insbesondere umfasst die Erfindung auch andere Ausführungsformen des Eisenkerns 15 des Fehlerstromreduzieres 2.

### Bezugszeichenliste

- 1: Elektrische Energieübertragungsstrecke
- 2: Fehlerstromreduzierer
- 3: Elektrische Phasen
- 4: Eingangstransformator
- 5: Sternpunkt
- 6: Löschspule
- 7: Erdpotential
- 8: Freileitung
- 9: Leitungsimpedanzen
- 10: Erdkapazitäten
- 11: Last
- 12: Erdleitung
- 13: Erdkapazitäten
- 14: Induktiv gekoppelte Spulen
- 15: Eisenkern
- 16: Wicklung
- 17: 3-Phasentransformator
- 18: Primärwicklung
- 19: Sekundärwicklung
- 20: Brücke
- 21: Kombinierte Wicklungen
- 22: Sammelschiene 1
- 23: Sammelschiene 2
- 24: Sammelschiene 3
- 25: Sammelschiene 4
- 26: Erdschluss
- 27: Transformator
- 28: Bahnstromversorgungsnetz

## Patentansprüche

1. Mehrphasige elektrische Energieübertragungsstrecke (1), wobei ein Fehlerstromreduzierer (2) vorgesehen ist, der zumindest zwei der elektrischen Phasen (3) der elektrischen Energieübertragungsstrecke (1) induktiv koppelt, wobei der Fehlerstromreduzierer (2) einen Eisenkern (15) mit voneinander elektrisch isolierten, induktiv gekoppelten Spulen (14) umfasst, wobei die Spulen (14) mit den Phasen (3) der Energieübertragungsstrecke (1) verbunden sind und gleiche Wicklungszahl aufweisen, **dadurch gekennzeichnet, dass** die Energieübertragungsstrecke (1) als gelöschtes Netz ausgeführt ist und dass die Energieübertragungsstrecke eine Freileitung (8) und eine Erdleitung (12) umfasst und der Fehlstromreduzierer (2) am Übergang der Freileitung (8) in die Erdleitung (12) vorgesehen ist.

2. Energieübertragungsstrecke nach Anspruch 1, **dadurch gekennzeichnet, dass** der Fehlerstromreduzierer (2) einen Transformator (27) mit einer Primärwicklung (18) und einer Sekundärwicklung (19) umfasst, wobei eine Phase der Energieübertragungsstrecke (1) mit der Primärwicklung (18), und eine andere Phase der Energieübertragungsstrecke (1) mit der Sekundärwicklung (19) verbunden ist.

3. Energieübertragungsstrecke nach Anspruch 2, **dadurch gekennzeichnet, dass** die Primärwicklung (18) und die Sekundärwicklung (19) des Transformators (27) die gleiche Wicklungszahl aufweist.

4. Energieübertragungsstrecke nach Anspruch 2 oder 3, **dadurch gekennzeichnet, dass** die Primärwicklung (18) und die Sekundärwicklung (19) auf dem selben Schenkel des Transformators (27) angebracht sind.

5. Energieübertragungsstrecke nach einem der Ansprüche 1 bis 4, **dadurch gekennzeichnet, dass** der Fehlerstromreduzierer (2) einen 3-Phasentransformator (17) umfasst, dessen Primärwicklungen (18) und Sekundärwicklungen (19) durch eine Brücke (20) miteinander elektrisch verbunden sind und drei elektrisch isolierte, induktiv gekoppelte Wicklungen (12) mit gleicher Wicklungszahl bilden, wobei je eine der Phasen (3) der Energieübertragungsstrecke (1) mit einer der Wicklungen (12) verbunden ist.

6. Energieübertragungsstrecke nach Anspruch 5, **dadurch gekennzeichnet, dass** die Primärwicklungen (18) und Sekundärwicklungen (19) auf dem selben Schenkel des 3-Phasentransformators (17) angeordnet sind.

7. Energieübertragungsstrecke nach einem der vorhergehenden Ansprüche, **dadurch gekennzeichnet, dass** im Fehlerstromreduzierer (2) Ausgleichswicklungen vorgesehen sind.

8. Energieübertragungsstrecke nach einem der vorhergehenden Ansprüche, **dadurch gekennzeichnet, dass** im Fehlerstromreduzierer (2) zur Reduktion von Oberschwingungsresonanzen Drosselspulen vorgesehen sind.

9. Energieübertragungsstrecke nach einem der vorhergehenden Ansprüche, **dadurch gekennzeichnet, dass** es sich bei der Energieübertragungsstrecke (1) um ein mehrphasiges Bahnstromversorgungsnetz handelt.

10. Energieübertragungsstrecke nach einem der vorhergehenden Ansprüche, **dadurch gekennzeichnet, dass** der Fehlerstromreduzierer für ein Teilnetz, insbesondere ein Bahnstromversorgungsnetz, vorgesehen ist, das vom öffentlichen elektrischen Energieversorgungsnetz vorzugsweise durch einen Scott-Transformator abgetrennt ist.

11. Energieübertragungsstrecke nach Anspruch 10, **dadurch gekennzeichnet, dass** das Bahnstromversorgungsnetz 2-phasig ausgeführt ist und eine vom öffentlichen elektrischen Energieversorgungsnetz abweichende Frequenz, insbesondere 16,7Hz, aufweist.

12. Verfahren zur Fehlerstromreduktion in einer mehrphasigen elektrischen Energieübertragungsstrecke (1) umfassend eine Freileitung (8) und eine Erdleitung (12), **dadurch gekennzeichnet, dass** die Energieübertragungsstrecke (1) als gelöschtes Netz ausgeführt ist und dass zur Reduktion von Oberschwingungen beim Erdschluss einer Phase (3) zumindest zwei der elektrischen Phasen (3) der elektrischen Energieübertragungsstrecke (1) beim Übergang der Freileitung (8) in die Erdleitung (12) induktiv gekoppelt werden.

## Claims

1. A multiphase electrical energy transmission line (1), wherein a leakage current reducer (2) is provided, which inductively couples at least two of the electrical phases (3) of the electrical energy transmission line (1), wherein the leakage current reducer (2) comprises an iron core (15) with inductively coupled coils (14), which are insulated from one another electrically, wherein the coils (14) are connected with the phases (3) of the energy transmission line (1), and have the same number of turns, **characterised in that**, the energy transmission line (1) is embodied as a compensated network, and **in that**, the energy transmission line comprises an overhead line (8) and an earth line (12), and the leakage current reducer (2) is provided at the point of transition of the overhead line (8) into the earth line (12).

2. The energy transmission line in accordance with claim 1, **characterised in that**, the leakage current reducer (2) comprises a transformer (27) with a primary winding (18) and a secondary winding (19), wherein one phase of the energy transmission line (1) is connected with the primary winding (18), and another phase of the energy transmission line (1) is connected with the secondary winding (19).

3. The energy transmission line in accordance with claim 2, **characterised in that**, the primary winding (18) and the secondary winding (19) of the transformer (27) have the same number of turns.

4. The energy transmission line in accordance with claim 2 or 3, **characterised in that**, the primary winding (18) and the secondary winding (19) are fitted on the same leg of the transformer (27).

5. The energy transmission line in accordance with one of the claims 1 to 4, **characterised in that**, the leakage current reducer (2) comprises a 3-phase transformer (17), the primary windings (18) and secondary windings (19) of which are electrically connected with one another by a bridge (20), and form three electrically insulated, inductively coupled windings (12) with the same number of turns, wherein each of the phases (3) of the energy transmission line (1) is connected with one of the windings (12).

6. The energy transmission line in accordance with claim 5, **characterised in that**, the primary windings (18) and the secondary windings (19) are fitted on the same leg of the 3-phase transformer (17).

7. The energy transmission line in accordance with one of the preceding claims, **characterised in that**, compensation windings are provided in the leakage current reducer (2).

8. The energy transmission line in accordance with one of the preceding claims, **characterised in that**, choke coils are provided in the leakage current reducer (2) for purposes of reducing harmonic resonances.

9. The energy transmission line in accordance with one of the preceding claims, **characterised in that**, the energy transmission line (1) takes the form of a multiphase traction power supply network.

10. The energy transmission line in accordance with one of the preceding claims, **characterised in that**, the leakage current reducer is provided for a sub-network, in particular, a traction power supply network, which is preferably separated from the public electrical energy supply network by means of a Scott transformer.

11. The energy transmission line in accordance with claim 10, **characterised in that**, the traction power supply network is embodied with 2 phases, and has a frequency deviating from that of the public electrical energy supply network, in particular a frequency of 16.7 Hz.

12. A method for purposes of leakage current reduction in a multiphase electrical energy transmission line (1), comprising an overhead line (8), and an earth line (12), **characterised in that**, the energy transmission line (1) is embodied as a compensated network, and **in that**, for purposes of reduction of harmonics when one phase (3) is connected to earth, at least two of the electrical phases (3) of the electrical energy transmission line (1) are inductively coupled at the point of transition of the overhead line (8) into the earth line (12).

## Revendications

1. Circuit électrique polyphasé de transmission d'énergie (1), pour lequel un réducteur de courant de fuite (2) est prévu, qui couple de manière inductive au moins deux des phases électriques (3) du circuit électrique de transmission d'énergie (1), pour lequel le réducteur de courant de fuite (2) comprend un noyau de fer (15) avec des bobines (14) isolées électriquement l'une de l'autre, couplées de manière inductive, pour lequel les bobines (14) sont reliées aux phases (3) du circuit de transmission d'énergie (1) et comportent le même nombre d'enroulements, **caractérisé en ce que** le circuit de transmission d'énergie (1) est réalisé comme un réseau compensé et **en ce que** le circuit de transmission d'énergie comprend une ligne aérienne (8) et une ligne de terre (12) et le réducteur de courant de fuite (2) est prévu à la transition de la ligne aérienne (8) dans la ligne de terre (12).

2. Circuit de transmission d'énergie selon la revendication 1 **caractérisé en ce que** le réducteur de courant de fuite (2) comprend un transformateur (27) avec un enroulement primaire (18) et un enroulement secondaire (19), pour lequel une phase du circuit de transmission d'énergie (1) est reliée à l'enroulement primaire (18) et une autre phase du circuit de transmission d'énergie (1) à l'enroulement secondaire (19).

3. Circuit de transmission d'énergie selon la revendication 2 **caractérisé en ce que** l'enroulemet primaire (18) et l'enroulement secondaire (19) du transformateur (27) comportent le même nombre d'enroulements.

4. Circuit de transmission d'énergie selon la revendication 2 ou 3 **caractérisé en ce que** l'enroulement primaire (18) et l'enroulement secondaire (19) sont montés sur la même branche du transformateur (27).

5. Circuit de transmission d'énergie selon l'une quelconque des revendications 1 à 4 **caractérisé en ce que** le réducteur de courant de fuite (2) comprend un transformateur triphasé (17), dont les enroulements primaires (18) et les enroulements secondaires (19) sont reliés entre eux par un pont (20) et forment trois enroulements (12) électriquement isolés, couplés de manière inductive avec le même nombre d'enroulements, pour lequel chacune des phases (3) du circuit de transmission d'énergie (1) est reliée à un des enroulements (12).

6. Circuit de transmission d'énergie selon la revendication 5 **caractérisé en ce que** les enroulements primaires (18) et les enroulements secondaires (19) sont disposés sur la même branche du transformateur triphasé (17).

7. Circuit de transmission d'énergie selon l'une quelconque des revendications précédentes **caractérisé en ce que** des enroulements de compensation sont prévus dans le réducteur de courant de fuite (2).

8. Circuit de transmission d'énergie selon l'une quelconque des revendications précédentes **caractérisé en ce que** des bobines d'inductance sont prévues dans le réducteur de courant de fuite (2) pour la réduction des résonances harmoniques.

9. Circuit de transmission d'énergie selon l'une quelconque des revendications précédentes **caractérisé en ce qu'**en ce qui concerne le circuit de transmission d'énergie (1) il s'agit d'un réseau d'alimentation de courant de traction multiphasé.

10. Circuit de transmission d'énergie selon l'une quelconque des revendications précédentes **caractérisé en ce que** le réducteur de courant de fuite est prévu pour un réseau partiel, en particulier un réseau d'alimentation de courant de traction, qui est séparé du réseau électrique publique d'alimentation en énergie, de préférence par un transformateur Scott.

11. Circuit de transmission d'énergie selon la revendication 10 **caractérisé en ce que** le réseau d'alimentation de courant de traction est réalisé biphasé et comporte une fréquence dérivant du réseau électrique publique d'alimentation en énergie, en particulier de 16,7 Hz.

12. Procédé de réduction du courant de fuite dans un circuit électrique polyphasé de transmission d'énergie (1) comprenant une ligne aérienne (8) et une ligne de terre (12) **caractérisé en ce que** le circuit de transmission d'énergie (1) est réalisé comme un réseau compensé et **en ce que** pour la réduction des harmoniques en cas de défaut de terre d'une phase (3) au moins deux des phases électriques (3) du circuit de transmission d'énergie (1) sont couplées de manière inductive lors de la transition de la ligne aérienne (8) dans la ligne de terre (12).
